# EUROPEAN PATENT SPECIFICATION

(11) **EP 1 481 952 B1**
(45) Date of publication and mention of the grant of the patent: **21.11.2007**
(21) Application number: 04018566.2
(22) Date of filing: 10.03.2003
(51) Int. Cl.: C04B 28/02, C04B 24/26

(54) **Admixture for a hydraulic composition**
Zusatzmittel für hydraulische Zusammensetzungen
Adjuvant pour des compositions hydrauliques

(30) Priority: 11.03.2002 JP 2002065050
(43) Date of publication of application: 01.12.2004
(62) Divisional of application: 03004946.4
(73) Proprietor: KAO CORPORATION, Chuo-ku, Tokyo (JP)
(72) Inventor: Hamada, Daisuke, Wakayama-shi Wakayama (JP); Yamato, Fujio, Wakayama-shi Wakayama (JP); Shimoda, Masaaki, Wakayama-shi Wakayama (JP)
(74) Representative: HOFFMANN EITLE

(56) References cited:
- EP-A- 0 931 776
- EP-A- 0 931 799
- EP-A- 0 995 727
- EP-A- 1 041 053
- EP-A- 1 103 570
- EP-A- 1 112 984
- EP-A- 1 179 517
- JP-A- 6 092 704

## Description

### Technical Field

This invention relates to a method of improving fluidity retention of a hydraulic composition or an admixture for a hydraulic composition. This invention relates in particular to an admixture for a hydraulic composition which is excellent in shelf stability and capable of endowing a hydraulic composition for cement pastes, mortar and concrete or the like with excellent fluidity and fluidity retention without being influenced by variations in hydraulic powders of cement etc.

### Prior Arts

As cement admixtures such as a high-performance water-reducing agent, those based on polycarboxylic acids are known, but the performance of polycarboxylic acid-based dispersants is known to be varied depending on the concentration of sulfate ions in hydraulic slurry. The concentration of sulfate ions in a hydraulic slurry is varied depending on the type of cement etc., so that when the type of cement is changed, the dispersants may fail to exhibit their initial desired effect. To solve this problem, JP-A 2000-327385 discloses a dispersant with less variation in performance against variation in sulfate ions. In the reference the water-reducing performance is improved to a certain extent, but the problem of variation in fluidity retention has not been completely solved.

On one hand, JP-A 11-60305 and JP-A 9-67153 disclose techniques of improving fluidity retention by both a polyalkylene glycol ester monomer/carboxylic acid monomer copolymer and at least one kind of unsaturated carboxylic acid-based homopolymer or copolymer.

The polycarboxylic acid-based polymer can, even in an acid form, be used directly as a dispersant for cement. But from the viewpoint of inhibiting acid hydrolysis of esters or corrosion of material of a tank or the like, the polymer is often used in a salt form after neutralization by an alkali. For handling etc., the polymer is preferably in the form of an aqueous solution.

Each of the above-mentioned two copolymers, when used at an solid concentration of 10 weight-% or more as usual, is in the form of a homogeneous aqueous solution, but the two are mixed for use, the mixture may be separated after being left for a predetermined time, thus making it sometimes necessary to add the two copolymers separately to cement in order to provide a stable performance. In the case of the mixed product rendered highly viscous to suppress the above-mentioned separation, their solution is so highly viscous as to be poor in dropping at the time of dosing, thus suffering from varying performance attributable to errors in dosing. When the polymers different in the content of carboxyl groups are mixed, there arises a difference in solubility between the polymers, which would sometimes cause phase separation, so there is a demand for polymers excellent in shelf stability even in the form of an aqueous solution.
JP 06 092704 discloses an admixture for a concrete composition comprising an oxycarboxylic acid optionally in combination with a copolymer.

### Disclosure of invention

The object of this invention is to provide a method of improving fluidity retention of a hydraulic composition or a liquid admixture for a hydraulic composition. The composition is excellent in shelf stability and handling and capable of exhibiting dispersibility and dispersion retention stably even if the type of hydraulic powders of cement etc. is changed.

The invention provides a method of improving fluidity retention of a hydraulic composition according to claim 1.

It is preferable in the method that the sulfate ion concentration is 6,000 to 40,000 mg/kg.

An admixture for a hydraulic composition which is in the form of a homogeneous aqueous solution, wherein a 5-fold (ratio by weight) dilution (dilution to 5 times as much an amount as the initial) of the admixture with water has an electric conductivity of not higher than 45 mS/cm at 25°C, comprises least one kind of a polycarboxylic acid-based dispersant at least one kind of a polycarboxylic acid-based dispersant comprising a polymer wherein the ratio of carboxylic acid monomers is 3 to 30 % by weight.

It is preferable in the method that the polycarboxylic acid-based dispersant is selected from: dispersants comprising a copolymer obtained by polymerizing a monomer (a) represented by formula (A) : 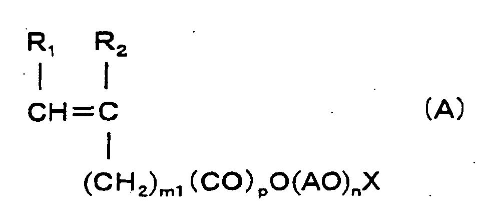 wherein R₁ and R₂ each represents a hydrogen atom or a methyl group, m1 is a number of 0 to 2, p is 0 or 1, AO is a C₂₋₄ oxyalkylene group, n is a number of 2 to 300 and X represents a hydrogen atom or a C₁₋₂₂ alkyl group;
with at least one monomer (b) selected from compounds represented by formulae (B) and (C): 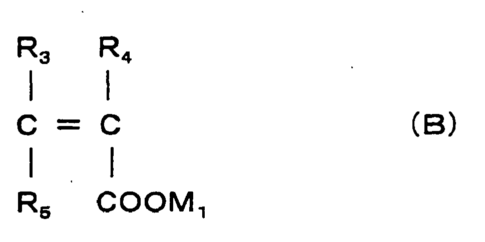 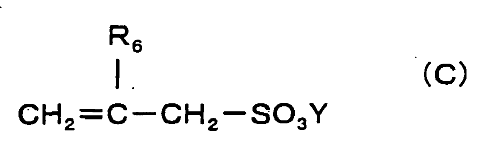 wherein R₃ to R₅ are the same as or different from one another and each represent a hydrogen atom, a methyl group or (CH₂)ₘ₂COOM₂, R₆ represents a hydrogen atom or a methyl group, M₁, M₂ and Y are the same as or different from one another and each represent a hydrogen atom, an alkali metal, an alkaline earth metal, ammonium, an alkylammonium or a substituted alkylammonium, an amine salt or a substituted amine salt and m2 is a number of 0 to 2.

As used herein, the phrase "in the form of a homogeneous aqueous solution" refers to a state free of liquid or solid separation, precipitation, flotation, etc. when observed with naked eyes. Any part of the solution are estimated as equivalent to other parts in view of the chemical organization thereof. The admixture for a hydraulic composition in this invention is in the form of a homogenious aqueous solution particularly preferably after storage at 20°C for 1 month after preparation.

The phrase "ratio of carboxylic acid monomers" means the ratio by weight of unsaturated carboxylic acids to the total monomers used in producing the polymer. When the monomer is a salt, the weight of its corresponding acid is calculated, and in the case of a structure for example an anhydride such as maleic anhydride, the weight of the anhydride is calculated.

Preferably, the polycarboxylic acid-based dispersant is selected from the following: dispersants (referred to collectively as dispersant (2a)) comprising a copolymer obtained by polymerizing a monomer (a) represented by formula (A) with at least one monomer (b) selected from compounds represented by the formulae (B) and (C) : 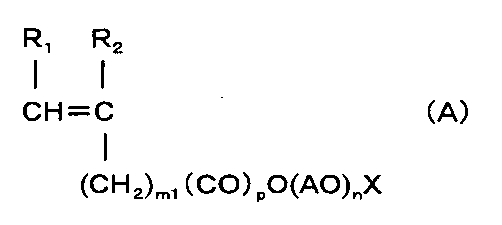 wherein R₁ and R₂ each represents a hydrogen atom or a methyl group, m1 is a number of 0 to 2, p is 0 or 1, AO is a C₂₋₄ oxyalkylene group, n is a number of 2 to 300 and X represents a hydrogen atom or a C₁₋₂₂ alkyl group. 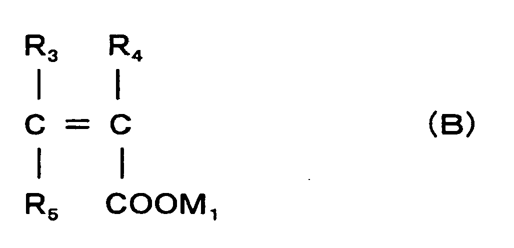 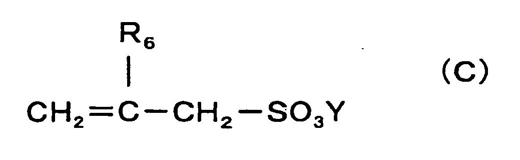 wherein R₃ to R₅ are the same as or different from one another and each represent a hydrogen atom, a methyl group or (CH₂)ₘ₂COOM₂, R₆ represents a hydrogen atom or a methyl group, M₁, M₂ and Y are the same as or different from one another and each represent a hydrogen atom, an alkali metal, an alkaline earth metal, ammonium, an alkylammonium or a substituted alkylammonium, an amine salt or substituted amine salt, and m2 is a number of 0 to 2.

### <Dispersant (2a)>

The copolymer as the dispersant (2a) is a water-soluble vinyl copolymer having an oxyalkylene group. The monomer (a) represented by the formula (A) used in production of the copolymer as the dispersant (2a) is preferably an ester of (meth)acrylic acid or (half)ester of maleic acid with an alkyl-terminated polyalkylene glycol such as methoxy polyethylene glycol, methoxy polypropylene glycol, methoxy polybutylene glycol, or ethoxy polyethylene polypropylene glycol, or an ether of (meth)allyl alcohol with the alkyl-terminated polyalkylene glycol, or an adduct having ethylene oxide (hereinafter referred to as EO) or propylene oxide (hereinafter referred to as PO) added to (meth)acrylic acid, maleic acid or (meth) allyl alcohol R₁ is preferably a hydrogen atom, p is preferably 1, and m1 is preferably 0. It is more preferably an ester of (meth)acrylic acid with an alkoxy polyethylene glycol, in particular methoxy polyethylene glycol. EO, PO or butyleneoxide (BO) may be used for AO. X is preferably a hydrogen or a C₁₋₄ alkyl group.

The average number of polyalkylene glycol molecules added, i.e. "n" in the formula (A), is 2 to 300, preferably 5 to 200, particularly preferably 20 to 150 from the viewpoint of dispersibility and fluidity retention (slump retention). In the copolymers different in AO, for example those containing EO and PO, the mode of addition thereof is not particularly limited, and any of random addition, block addition and alternate addition can be used.

The monomer represented by the formula (B) includes acrylic acid, methacrylic acid, crotonic acid, and metal salts thereof. As the unsaturated dicarboxylic acid monomer, use is made of maleic anhydride, maleic acid, itaconic anhydride, itaconic acid, citraconic anhydride, citraconic acid or fumaric acid, or an alkali metal salt, alkaline earth metal salt, ammonium salt, amine salt or substituted amine salt thereof.

As the monomer represented by the formula (C), use is made of allylsulfonic acid or methallylsulfonic acid, or an alkali metal salt, alkaline earth metal salt, ammonium salt, amine salt, substituted amine salt thereof, or the like.

From the viewpoint of dispersibility, fluidization, fluidity retention and separation resistance, the mole ratio of the monomer (a) to the monomer (b) as the reaction units constituting the copolymer as the dispersant (2a), that is, the monomer (a) /the monomer (b), is preferably 1/100 to 10000/100, more preferably 1/100 to 200/100, especially 1/100 to 100/100. In the dispersant (2a), however, the ratio of carboxylic acid monomers as monomers represented by the formula (B) should be 30 weight-% or less. The ratio of the unsaturated carboxylic acid monomers charged is preferably 3 to 30 weight-% and simultaneously 50 to 99 mol-%, more preferably 5 to 25 weight-% and simultaneously 60 to 95 mol-%.

The copolymer as the dispersant (2a) can be produced in a known method. The method includes, for example, solvent polymerization methods in JP-A 59-162163, JP-B 2-11542, JP-B 2-7901, JP-B 2-7897 and the like.

The solvent used in the solvent polymerization method includes water, methyl alcohol, ethyl alcohol, isopropyl alcohol, benzene, toluene, xylene, cyclohexane, n-hexane, aliphatic hydrocarbons, ethyl acetate, acetone, methyl ethyl ketone, etc. In consideration of handling and reaction facilities, water and primary to quaternary alcohols are preferable.

As an aqueous polymerization initiator, a water-soluble initiator such as an ammonium or alkali metal persulfate or hydrogen peroxide is used. For solvent polymerization using a non-aqueous solvent, benzoyl peroxide, lauroyl peroxide or the like is used as the polymerization initiator.

An accelerator such as sodium hydrogen sulfite, mercaptoethanol or an amine compound can also be used in combination with the polymerization initiator, and the polymerization initiator or the accelerator can be suitably selected for use.

The weight-average molecular weight of the copolymer as the dispersant (2a) (polyethylene oxide-equivalent molecular weight determined by gel permeation chromatography) is preferably 1, 000 to 500,000, more preferably 3, 000 to 150,000, from the viewpoint of dispersibility and fluidity retention(slump retention).

Further, the copolymer as the dispersant (2a) may be reacted with other copolymerizable monomers in such a range that the effect of this invention is not deteriorated. Example of such monomers include acrylonitrile, acrylate, acrylamide, methacrylamide, styrene, styrenesulfonic acid, etc.

In this invention, two or more kinds of the dispersant (2a) are preferably simultaneously used. In this case, those different in n (AO chain length) in the formula (A), those different in the copolymerization molar ratio of the monomers and those different in the monomers of the formula (B) are preferable. In particular, two or more kinds of copolymers different in n by 10 or more in the formula (A) are preferably contained. For example, one of the copolymers is produced from the monomer (a) wherein n = 2 to 100, preferably 2 to 50, more preferably 5 to 20, and the other from the monomer (a) wherein n = 20 to 300, preferably 50 to 200, more preferably 100 to 150, provided that the two kinds of monomers are different in n by 10 or more.

The two or more kinds of dispersants are selected preferably from those wherein the ratio of unsaturated carboxylic acid monomers charged is preferably 3 to 30 weight-% and simultaneously 50 to 99 mole-%, more preferably from those wherein the ratio of unsaturated carboxylic acid monomers charged is 5 to 25 weight-% and simultaneously 60 to 95 mole-%.

The oxycarboxylic acid to use in the invention preferably has 2 to 20 carbon atoms, more preferably 2 to 10. It preferably includes 1 to 8 carboxylic groups, in particular 1 to 3. A salt of an oxycarboxylic acid may be used. For example it may include gluconic acid, glucoheptonic acid, galactonic acid, citric acid, tartaric acid, malic acid, glycolic acid, lactic acid, α-oxybutyric acid, lactobionic acid or a salt thereof. The salt may include an inorganic salt such as sodium salt or potassium salt or an organic salt. Gluconic acid, glucoheptonic acid or a salt thereof, in particular sodium salt, is preferable from the viewpoint of dispersion of cement.

### <Admixture for hydraulic composition>

The admixture for a hydraulic composition according to this invention is in the form of an aqueous solution, and the electric conductivity of a 5-fold (ratio by weight) dilution of the admixture with water is not higher than 45 mS/cm, preferably not higher than 40 mS/cm, more preferably not higher than 35 mS/cm. The lower limit of the electric conductivity is 0 mS/cm. This electric conductivity was measured at 25°C by a conductivity meter (HORIBA DS-15).

The admixture for a hydraulic composition according to this invention comprises oxycarboxylic acid or a salt thereof and the dispersant (2) in an amount of preferably 10 to 40 weight-% in total, more preferably 15 to 35 weight-%, still more preferably 20 to 30 weight-% (in terms of solids content). Even in this range, a stable aqueous solution can be obtained.

In the admixture for a hydraulic composition according to this invention, the weight ratio of oxycarboxylic acid or a salt thereof to the dispersant (2), (oxycarboxylic acid or a salt thereof to the dispersant (2)), 10/90 to 40/60.

The pH value at 20°C of the admixture for a hydraulic composition according to this invention is preferably 4 to 9, particularly 5 to 8 from the viewpoint of hyrolysis of esters which are included in a dispersant of the admixture or prevention of corrosion of material of a storage tank or the like.

The acid used for controlling the degree of neutralization includes acetic acid, hydrochloric acid, sulfuric acid, and the like, and the alkali therefor includes potassium hydroxide, sodium hydroxide and triethanolamine. From the viewpoint of reducing the salt concentration in the admixture for a hydraulic composition, the acid dispersant is preferably neutralized with an alkali. In particular, neutralization with triethanolamine is preferable to achieve homogeneousness even at a high degree of neutralization.

The admixture for a hydraulic composition according to this invention is added to hydraulic slurry preferably in such an amount that the total amount of oxycarboxylic acid (salt), and the dispersant (2) is 0.05 to 3.0 weight-%, particularly 0.1 to 0.5 weight-% relative to hydraulic powders.

The admixture for a hydraulic composition according to this invention may be used in combination with other dispersants In this case the requirement for electric conductivity upon dilution may be preferably met. The dispersants may be those used generally as admixtures for concrete and may be preferably a high-range water-reducing agents (superplasticizer) or a water-reducing agents (plasticizer) such as a naphthalene sulfonate-formaldehyde condensate, a melamine sulfonate-formamide condensate, refined ligninsulfonic acid or a salt thereof, polystyrene sulfonate, cement dispersants having a phenol skeleton (for example, a formaldehyde co-condensate of phenolsulfonic acid with another copolymerizable monomer) and cement dispersants based on anilinesulfonic acid (for example, a formaldehyde co-condensate of anilinesulfonic acid with another copolymerizable monomer).

The admixture for a hydraulic composition according to this invention may be used for a hydraulic composition of cement for civil engineering, building, precast concrete products or the like. The hydraulic composition is not specified. Cement may be preferably normal portland cement, high-early strength portland cement, ultra high-early strength portland cement or CEMI listed in (Categorized in) European Standard EN197-1 or the like. A hydraulic powder such as blast furnace slag, fly ash or silica fume or a non-hydraulic lime stone powder etc. may be contained. In addition, silica fume cement or blast furnace slag blended cement, CEMII, CEMIII, CEMIV or CEMV, listed in(categorized in) European Standard EN197-1, may be used.

The admixture for a hydraulic composition according to this invention can be used in combination with known additives (materials). Examples of such additives include an AE agent, an AE water-reducing agent(plasticizer), a fluidizing agent, a high-range water reducing agent(superplasticizer), a retardant, a high-early-strength agent, an accelerator, a foaming agent, a water-retaining agent, a thickener, a waterproofing agent, a defoaming agent, a water-soluble polymer, various surfactants, siliceous sand, high-furnace slag, fly ash, silica fume etc.

### <hydraulic composition>

The admixture for a hydraulic composition according to this invention is added to various a hydraulic composition constituting hydraulic powder-containing cement pastes, mortar and concrete, and the kind of the hydraulic composition is not limited. The weight ratio of water to hydraulic powder (W/C) is preferably 0.7 or less, more preferably 0.6 or less, specially preferably 0.55 or less.

In particular, this invention provides a hydraulic composition comprising the invented admixture for a hydraulic composition added to water- and hydraulic powder-containing hydraulic slurry having a sulfate ion concentration of 2,500 to 40,000 mg/kg (ppm) in an aqueous solution thereof. In this hydraulic slurry, the concentration of sulfate ions in the aqueous solution is preferably 4,000 mg/kg (ppm) or more, more preferably 6,000 mg/kg (ppm) or more, still more preferably 7,000 mg/kg (ppm) or more.

The concentration of sulfate ions in the aqueous solution is preferably 6, 000 to 40, 000 mg/kg (ppm), still more preferably 7,000 to 40,000 mg/kg (ppm).

The invention may be preferably applied to a hydraulic slurry in which an amount of sulfate ion eluted from cement is 10 µmol or more per 1 g of cement, more preferably 25 µmol or more.

As the method of measuring the concentration of sulfate ions, a method of centrifuging the hydraulic slurry and measuring the concentration in the separated aqueous solution may be used. The centrifugation for obtaining the separated aqueous solution may be carried out under the conditions of 3000 rpm (with an arm radius of 17 cm) and 10 minutes.

Using the supernatant water obtained by this centrifugation, the concentration of sulfate ions was determined by ion chromatography (unit: Dionex DX-120; column: AS9-HS4; eluents: 5 mmol/L aqueous sodium bicarbonate, 12 mmol/L aqueous sodium carbonate; suppressor: 25 mmol/L aqueous sulfuric acid; detection: electric conductivity).

According to this invention, there can be obtained a liquid admixture for a hydraulic composition, which is capable of endowing a hydraulic composition with excellent fluidity and fluidity retention and simultaneously exhibiting this effect stably without being influenced by its storage period.

### EXAMPLE

As the concrete composition, Composition 1 or 2 in Table 1 was used. As the admixture, dispersant (1) in Table 2 and dispersant (2) in Table 3 were compounded and combined as shown in Table 4, and a neutralizing agent shown in Table 4 was added thereto to prepare a liquid admixture (balance: water) whose 5-fold dilution has the electric conductivity (determined under the conditions described above) shown in Table 4. The dispersion retention and shelf stability of the resulting admixture were evaluated in the following manner. The results are shown in Table 4.

### (i) Dispersion retention

The hydraulic materials in Table 1 were mixed (63 rpm, 120 seconds) in a mortar mixer, to prepare mortar. During this preparation, the dosage of the admixture was adjusted to obtain the mortar flow in the range of 220 mm ± 10 mm without tapping. The mortar flow value was measured just after mixing (F₀) and 90 minutes later (F₉₀). In terms of the percentage [(F₉₀/F₀) × 100] thereof to the initial flow value (F₀), the degree of dispersion retention (%) was calculated. The degree of dispersion retention thus determined was evaluated according to the following criteria:
⊚: The degree of dispersion retention is 90% or more.
○: The degree of dispersion retention is 80 to less than 90%.
Δ: The degree of dispersion retention is 70 to less than 80%.
×: The degree of dispersion retention is less than 70%.

### (ii) Shelf stability

The admixture in Table 4 was stored at 20°C for 1 month and then observed for its outer appearance, and when it was homogenious, "○" was given, while it was separated, "×" was given. The evaluation "○" means that the admixture is maintained in the form of a single-phase homogeneous aqueous solution.

**Table 1**

| | W/C | Mixture proportions | | | | Sulfate ion concentration |
|---|---|---|---|---|---|---|
| | | W(g) | C | | S (g) | |
| | | | (g) | Type | | |
| Composition 1 | 0.45 | 360 | 800 | CementA | 1500 | 7000 mg/kg |
| Composition 2 | 0.45 | 360 | 800 | CementB | 1500 | 15000mg/kg |

| | | | | | | |
|---|---|---|---|---|---|---|
| CementA:Normal Portland cement(Taiheiyo) (specific gravity 3.14, B.V.3400) Cement B:Normal Portland cement (Lafarge) (specific gravity 3.14. B.V.3620) S : Kimitsu Pit sand(F.M.2.42 S.G.2.63) Sulfate ion concentration: The concentration of sulfate ions in the separated aqueous solution obtained by centrifugation under the conditions described in the description of the application. | | | | | | |

**Table 2**

| | Dispersant(1)No. | | | | | | |
|---|---|---|---|---|---|---|---|
| | 1 | 2 | 3 | 4 | 5 | 6 | 7 |
| Monomer | Acrylic acid (100 mol-%) | Acrylic acid (100 mol-%) | Maleic anhydride/Acrylic acid= 60/40(mol-%) | Maleic anhydride /Acrylic acid= 70/30(mol-%) | Acrylic acid (100 mol-%) | Allyl alcohol EO₅ /Maleic anhydride= 25/75(mol-%) | Methanol EO₉. methacrylic acid monoester/methacrylic acid= 25/75(mol-%) |
| Molecular weight | 9000 | 13000 | 10000 | 18000 | 10000 | 5000 | 20000 |
| Solid content (weight-%) | 45 | 48 | 40 | 50 | 46 | 50 | 40 |
| Ratio of carboxylic acid monomers (weight-%) | 100 | 100 | 100 | 100 | 100 | 51.4 | 34.2 |

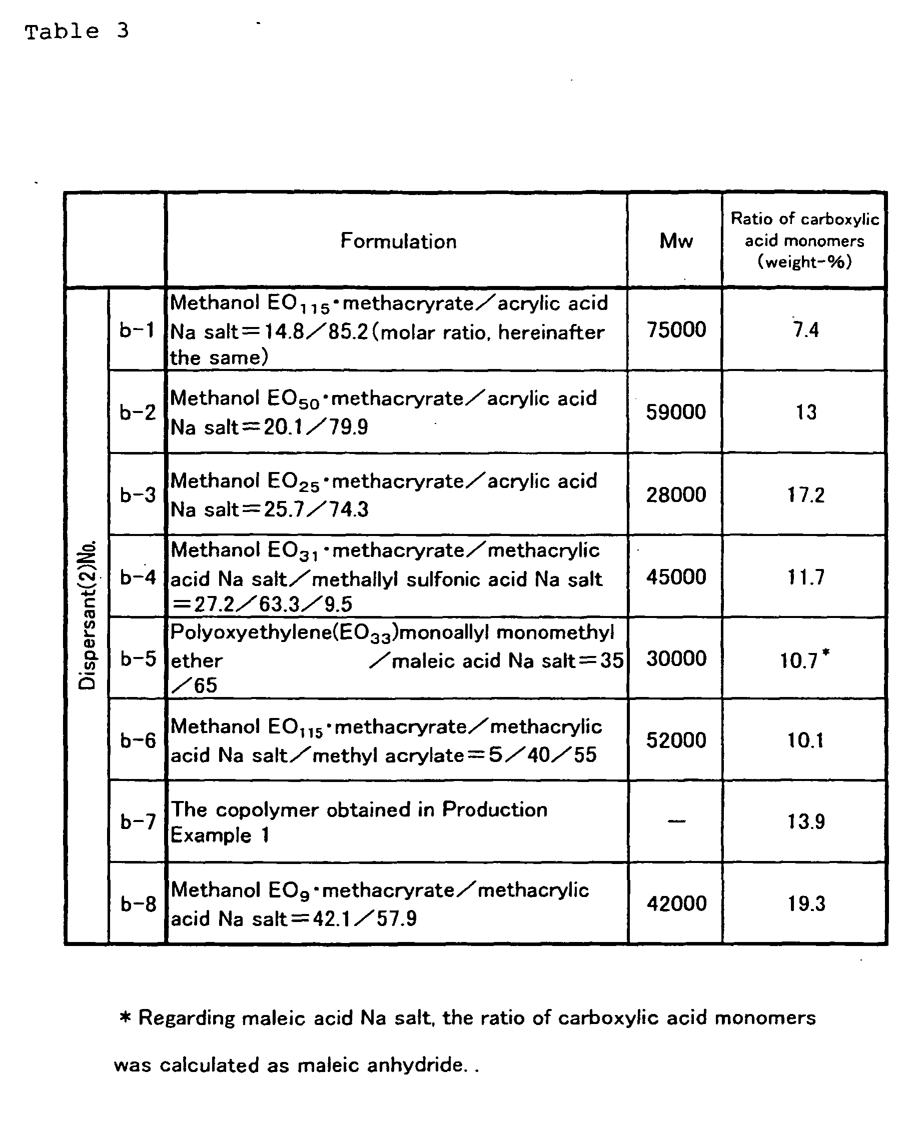

In the table, EO is an oxyethylene group, and its assigned number is average polymerization degree. Mw is weight-average molecular weight. b-7 is a product obtained in Production Example 1 below.

### Production Example 1 (Reference Example)

### (1) Monomers

A copolymer was produced from the following monomers by the process described below.
- A-1 : Methoxy polyethylene glycol monomethacrylate (number of added ethylene oxide molecules on average = 9; weight-average molecular weight, 496)
- A-2: Methoxy polyethylene glycol monomethacrylate (number of added ethylene oxide molecules on average = 120; weight-average molecular weight, 5380)
- B-1: methacrylic acid

### (2) Production of the copolymer (dispersant b-7)

Water, 1107 parts by weight, was introduced into a glass reaction vessel and then heated up to 70°C in a nitrogen atmosphere. Then, 3 solutions, that is, a monomer mixture (1) consisting of 179 parts by weight of the monomer A-1, 343 parts by weight of the monomer A-2, 101 parts by weight of the monomer B-1 and 281 parts by weight of water, 41.0 parts by weight of 10% aqueous 2-mercaptoethanol, and 36.5 parts by weight of 10% aqueous ammonium persulfate, were simultaneously dropped thereto over 55 minutes and subjected to copolymerization reaction, and then 3 solutions, that is, a monomer mixture (2) consisting of 76 parts by weight of the monomer A-1, 124 parts by weight of the monomer A-2, 25.7 parts by weight of the monomer B-1 and 103 parts by weight of water, 12.0 parts by weight of 10% aqueous 2-mercaptoethanol, and 10.8 parts by weight of 10% aqueous ammonium persulfate, were simultaneously dropped over 20 minutes to the above reaction system and subjected to copolymerization reaction, and further 3 solutions, that is, a monomer mixture (3) consisting of 62 parts by weight of the monomer A-1, 94 parts by weight of the monomer A-2, 15 parts by weight of the monomer B-1 and 78 parts by weight of water, 18 parts by weight of 10% aqueous 2-mercaptoethanol, and 7.2 parts by weight of 10% aqueous ammonium persulfate, were simultaneously dropped thereto over 15 minutes thereto and subjected to copolymerization reaction, and the reaction was carried out in this manner for 90 minutes in total. After dropping was finished, the reaction solution was aged at the same temperature for 1 hour, and 27.3 parts by weight of 10% aqueous ammonium persulfate was dropped thereto over 10 minutes, and the reaction solution was aged at 70°C for 2 hours to complete the polymerization reaction. Further, the reaction solution was neutralized with 59 parts by weight of 48% aqueous sodium hydroxide to give the copolymer.

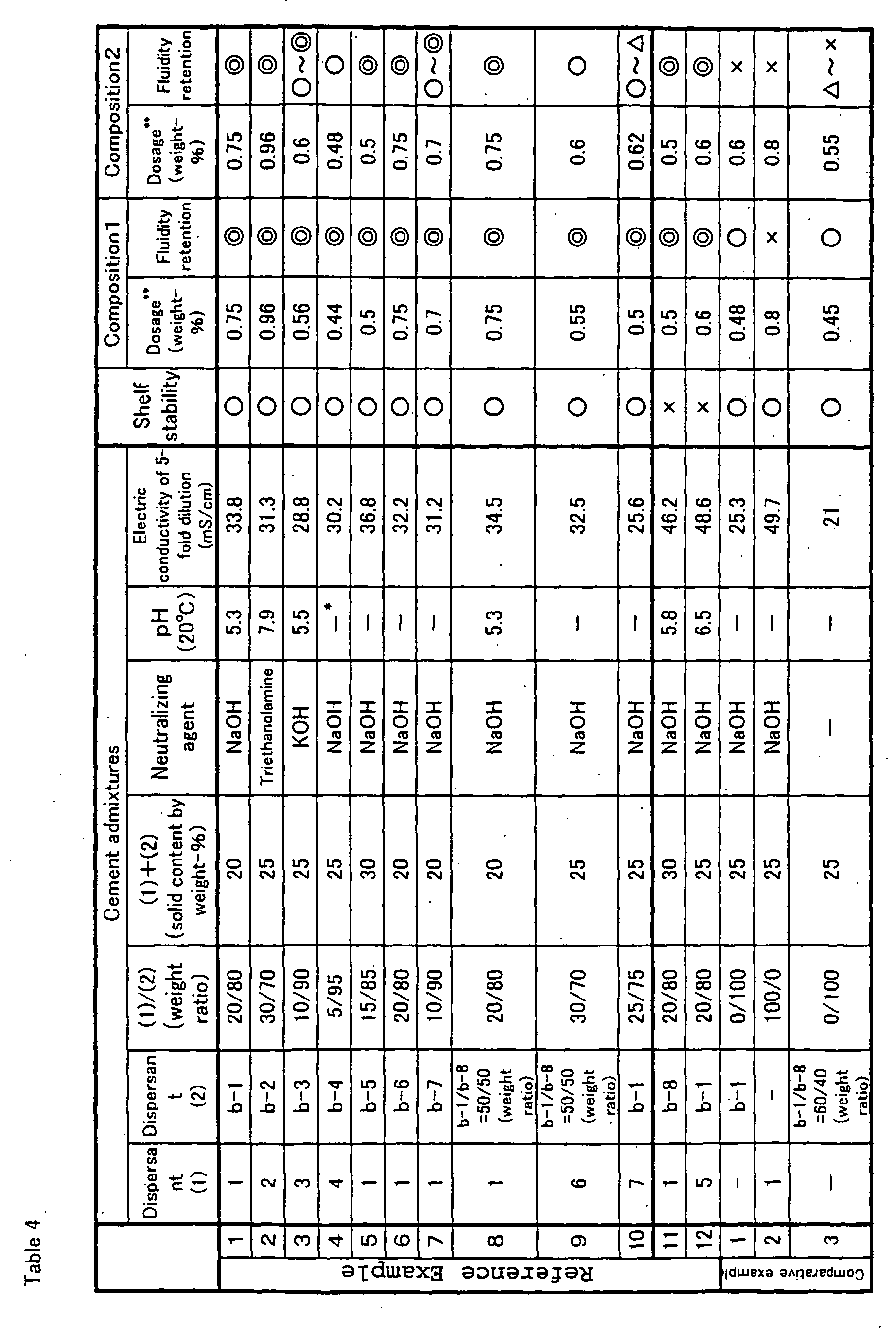

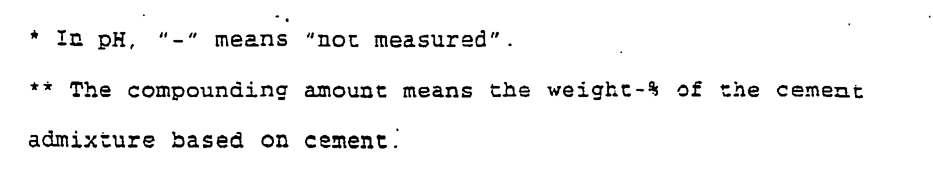

It is shown in Reference Examples 1 to 12, that the admixture including the dispersants (1) and (2), is provided with a good fluidity retention. The invention is therefore provided with a constant retention regardless changed concentrations of sulfate ion eluting from cement.

In Reference Examples 11 and 12 an excess neutralization caused an insufficient stability of the product. It is noted in Comparative Example 2 using the dispersant 1 only that the dispersion was initially realized, but coagulation happened immediately. No fluidity retention was accordingly obtained. It is noted in Comparative Example 1 and 3 using the dispersant 2 only that a good fluidity retention was found in the composition 1, but a bad fluidity retention was found in the composition 2 using cement including a large amount of eluted sulfate ion. Combination of No. 1 as the dispersant (1) with. (b-1) and (b-2) as the dispersant (2) was evaluated in view of pH and stability, changing a solid concentration (concentration by the total solid of the dispersants (1) and (2)), a neutralizing agent and a neutralization degree. Sodium hydroxide(NaOH), potassium hydroxide(KOH) or triethanolamine (TEA) was used as the neutralizing agent. Test results are shown in Table 5.

Using an oxycarboxylic acid (sodium gluconate) as the dispersant (1), shelf stability and dispersion retention were evaluated with concrete composition 3 or 4 shown in Table 6. The dispersant (2) neutralized with sodium hydroxide at the neutralization degree of 0.7 and sodium oxycarboxylic acid were used. Test results are shown in Table 7.

| Dispersant | | Compounding ratio by weight | | So. content (weight-%) | Neutralizing agent | Neutralization degree | pH | Shelf stability |
|---|---|---|---|---|---|---|---|---|
| Dispersant(1) | Dispersant(2) | Dispersant (1) | Dispersant(2) | | | | | |
| 1 | b-1 | 30 | 70 | 20 | NaOH | 0.35 | 5.4 | × |
| | | | | | | 0.3 | 5.2 | ○ |
| 1 | b-1 | 30 | 70 | 30 | NaOH | 0.2 | 4.9 | × |
| | | | | | | 0.15 | 4.7 | ○ |
| 1 | b-1 | 30 | 70 | 40 | NaOH | 0.1 | 4.9 | × |
| | | | | | | 0.5 | 4.6 | ○ |
| 1 | b-5 | 30 | 70 | 20 | NaOH | 0.4 | 5.9 | × |
| | | | | | | 0.35 | 5.6 | ○ |
| 1 | b-5 | 30 | 70 | 30 | NaOH | 0.25 | 5.1 | × |
| | | | | | | 0.2 | 4.9 | ○ |
| 1 | b-5 | 30 | 70 | 40 | NaOH | 0.15 | 4.8 | × |
| | | | | | | 0.1 | 4.6 | ○ |
| 1 | b-1 | 30 | 70 | 20 | KOH | 0.4 | 5.7 | × |
| | | | | | | 0.35 | 5.5 | ○ |
| 1 | b-1 | 30 | 70 | 30 | KOH | 0.2 | 5 | × |
| | | | | | | 0.15 | 4.8 | ○ |
| 1 | b-1 | 30 | 70 | 40 | KOH | 0.1 | 4.7 | × |
| | | | | | | 0.5 | 4.5 | ○ |
| 1 | b-5 | 30 | 70 | 20 | KOH | 0.5 | 6.9 | × |
| | | | | | | 0.45 | 6.7 | ○ |
| 1 | b-5 | 30 | 70 | 30 | KOH | 0.25 | 5.2 | × |
| | | | | | | 0.2 | 5 | ○ |
| 1 | b-5 | 30 | 70 | 40 | KOH | 0.15 | 4.9 | × |
| | | | | | | 0.1 | 4.7 | ○ |
| 1 | b-1 | 30 | 70 | 20 | TEA | 1 | 7.95 | ○ |
| 1 | b-1 | 30 | 70 | 30 | TEA | 0.25 | 5.1 | × |
| | | | | | | 0.2 | 4.9 | ○ |
| 1 | b-1 | 30 | 70 | 40 | TEA | 0.2 | 5.1 | × |
| | | | | | | 0.15 | 4.9 | ○ |
| 1 | b-5 | 30 | 70 | 20 | TEA | 1 | 8.1 | ○ |
| 1 | b-5 | 30 | 70 | 30 | TEA | 1 | 8.2 | ○ |
| 1 | b-5 | 30 | 70 | 40 | TEA | 0.2 | 5 | × |
| | | | | | | 0.15 | 4.8 | ○ |
| 1 | b-1 | 10 | 90 | 30 | NaOH | 0.25 | 5.1 | × |
| | | | | | | 0.2 | 4.9 | ○ |
| 1 | b-1 | 10 | 90 | 30 | KOH | 0.3 | 5.3 | × |
| | | | | | | 0.52 | 5.1 | ○ |
| 1 | b-1 | 10 | 90 | 30 | TEA | 0.4 | 5.6 | × |
| | | | | | | 0.35 | 5.4 | ○ |
| 1 | b-5 | 10 | 90 | 30 | NaOH | 0.3 | 5.6 | × |
| | | | | | | 0.25 | 5.4 | ○ |
| 1 | b-5 | 10 | 90 | 30 | KOH | 0.3 | 5.7 | × |
| | | | | | | 0.25 | 5.5 | ○ |
| 1 | b-5 | 10 | 90 | 30 | TEA | 0.83 | 8.09 | ○ |

**Table 6**

| | W/C | Mixture proportions | | | | Sulfate ion concentration (mg/kg) |
|---|---|---|---|---|---|---|
| | | W | C | | S (g) | |
| | | | (g) | Type | | |
| Composition3 | 0.45 | 360 | 800 | Cement C | 1500 | 6000 |
| Composition4 | 0.45 | 360 | 800 | Cement D | 1500 | 18000 |

| | | | | | | |
|---|---|---|---|---|---|---|
| Cement C: Normal Portland cement (Taiheiyo) Cement D: Normal Portland cement (Norcem) | | | | | | |

**Table 7**

| | Cement admixture | | | | Shelf stability | Composition3 | | Composition4 | |
|---|---|---|---|---|---|---|---|---|---|
| | Oxycarbonic acid | Dispersant (2) | Oxycarboxylic acid/(2)weight ratio | Oxycarboxylic acid+(2) solid content by weight | | dosage (weight-%) | Fluidity retention | doage (weight-%) | Fluidity retention |
| Example | Gluconic acid Na | b-1/b-8 | 20/(48/32) | 25% | ○ | 0.48 | ⊚ | 0.504 | ⊚ |
| Comparative example | - | b-1/b-8 | 0/(60/40) | 25% | ○ | 0.48 | ○ | 0.504 | × |

## Claims

1. A method of improving fluidity retention of a hydraulic composition, comprising adding, to a hydraulic slurry comprising water and a hydraulic powder and having a sulfate ion concentration of 2,500 to 40,000 mg/kg in the aqueous solution thereof, an oxycarboxylic acid and a polycarboxylic acid-based dispersant comprising a polymer wherein the ratio of carboxylic acid monomers is 3 to 30% by weight, wherein the weight ratio of the oxycarboxylic acid to the polycarboxylic acid dispersant ranges from 10/90 to 40/60.

2. The method according to Claim 1, in which the sulfate ion concentration is 6,000 to 40,000 mg/kg.

3. The method according to Claim 1, in which the polycarboxylic acid-based dispersant is selected from dispersants comprising a copolymer obtained by polymerising a monomer (a) represented by formula (A): 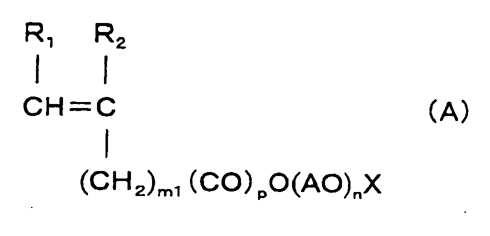 wherein R₁ and R₂ each represents a hydrogen atom or a methyl group, m1 is a number of 0 to 2, p is 0 or 1, AO is a C₂₋₄ oxyalkylene group, n is a number of 2 to 300 and X represents a hydrogen atom or a C₁₋₂₂ alkyl group;
with at least one monomer (b) selected from compounds represented by formulae (B) and (C): 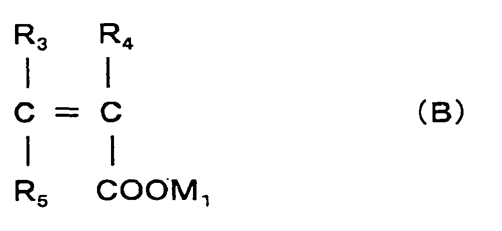 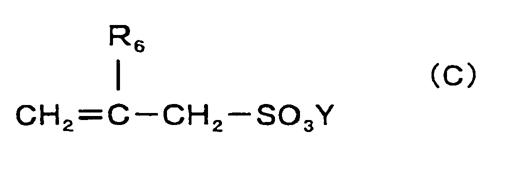 wherein R₃ to R₅ are the same as or different from one another and each represent a hydrogen atom, a methyl group or (CH₂)ₘ₂COOM₂, R₆ represents a hydrogen atom or a methyl group, M₁, M₂ and Y are the same as or different from one another and each represent a hydrogen atom, an alkali metal, an alkaline earth metal, ammonium, an alkylammonium or a substituted alkylammonium, an amine salt or a substituted amine salt and m2 is a number of 0 to 2.

## Patentansprüche

1. Verfahren zur Verbesserung der Fluiditätsretention einer hydraulischen Zusammensetzung, umfassend die Zugabe einer Oxycarbonsäure und eines Dispersionsmittels auf Polycarbonsäurebasis, umfassend ein Polymer, worin das Verhältnis der Carbonsäuremonomeren 3 bis 30 Gew.% ist, worin das Gewichtsverhältnis der Oxycarbonsäure zum Dispersionsmittel auf Polycarbonsäurebasis im Bereich von 10/90 bis 40/60 ist, zu einer hydraulischen Aufschlämmung, umfassend Wasser und ein hydraulisches Pulver und mit einer Sulfationenkonzentration von 2.500 bis 40.000 mg/kg in der wäßrigen Lösung davon.

2. Verfahren nach Anspruch 1, worin die Sulfationenkonzentration 6.000 bis 40.000 mg/kg ist.

3. Verfahren nach Anspruch 1, worin das Dispersionsmittel auf Polycarbonsäurebasis ausgewählt ist aus Dispersionsmitteln, umfassend ein Copolymer, erhalten durch Polymerisation eines Monomers (a) mit der Formel (A) : 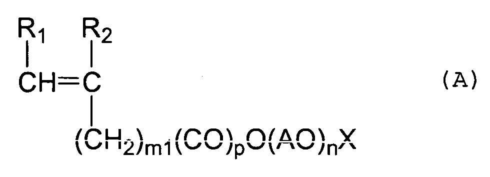 worin R₁ und R₂ jeweils ein Wasserstoffatom oder eine Methylgruppe sind, m1 eine Zahl von 0 bis 2 ist, p 0 oder 1 ist, AO eine C₂₋₄-Oxyalkylengruppe ist, n eine Zahl von 2 bis 300 ist und X ein Wasserstoffatom oder eine C₁₋₂₂-Alkylgruppe ist;
mit zumindest einem Monomer (b), ausgewählt aus Verbindungen mit den Formeln (B) und (C): 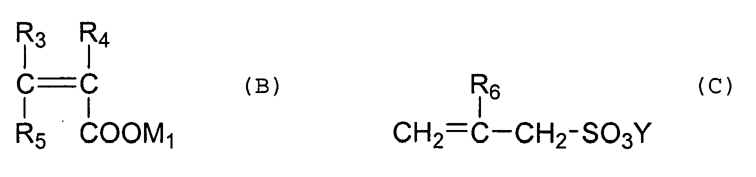 worin R₃ bis R₅ gleich oder verschiedenen voneinander sind und jeweils ein Wasserstoffatom, eine Methylgruppe oder (CH₂)ₘ₂COOM₂ sind, R₆ ein Wasserstoffatom oder eine Methylgruppe ist, M₁, M₂ und Y gleich oder verschieden voneinander sind und jeweils ein Wasserstoffatom, ein Alkalimetall, Erdalkalimetall, Ammonium, Alkylammonium oder substituiertes Alkylammonium, Aminsalz oder substituiertes Aminsalz sind und m2 eine Zahl von 0 bis 2 ist.

## Revendications

1. Procédé d'amélioration de conservation de fluidité d'une composition hydraulique, comprenant l'addition, à une boue hydraulique comprenant de l'eau et une poudre hydraulique et ayant une concentration en ions sulfate de 2 500 à 40 000 mg/kg dans la solution aqueuse de celle-ci, d'un acide oxycarboxylique et d'un dispersant à base d'un poly(acide carboxylique) comprenant un polymère dans lequel le rapport des monomères acide carboxylique est de 3 à 30 % en poids, dans lequel le rapport en poids de l'acide oxycarboxylique au dispersant à base d'un poly(acide carboxylique) s'échelonne de 10/90 à 40/60.

2. Procédé selon la revendication 1, dans lequel la concentration en ions sulfate est de 6 000 à 40 000 mg/kg.

3. Procédé selon la revendication 1, dans lequel le dispersant à base d'un poly(acide carboxylique) est choisi parmi les dispersants comprenant un copolymère obtenu par polymérisation d'un monomère (a) représenté par la formule (A) : 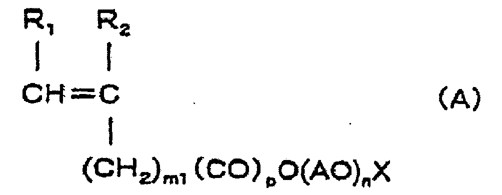 dans laquelle R₁ et R₂ représentent chacun un atome d'hydrogène ou un groupe méthyle, m1 est un nombre de 0 à 2, p vaut 0 ou 1, AO est un groupe oxyalkylène en C₂-C₄, n est un nombre de 2 à 300 et X représente un atome d'hydrogène ou un groupe alkyle en C₁-C₂₂ ;
avec au moins un monomère (b) choisi parmi les composés représentés par les formules (B) et (C): 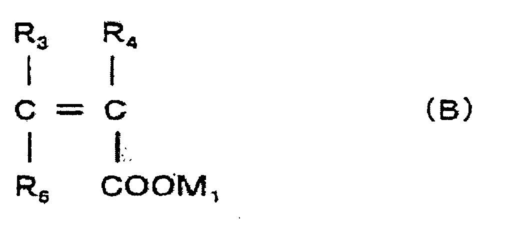 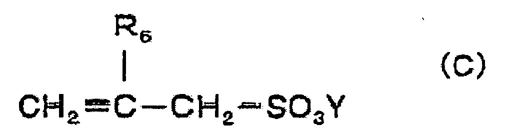 dans lesquelles R₃ à R₅ sont identiques ou différents les uns des autres et représentent chacun un atome d'hydrogène, un groupe méthyle ou (CH₂)ₘ₂COOM₂, R₆ représente un atome d'hydrogène ou un groupe méthyle, M₁, M₂ et Y sont identiques ou différents les uns des autres et représentent chacun un atome d'hydrogène, un métal alcalin, un métal alcalino-terreux, un ammonium, un alkylammonium ou un alkylammonium substitué, un sel d'amine ou un sel d'amine substitué et m2 est un nombre de 0 à 2.
